# EUROPEAN PATENT APPLICATION

(11) **EP 3 151 179 A1**
(43) Date of publication of application: **05.04.2017**
(21) Application number: 15002828.0
(22) Date of filing: 02.10.2015
(51) Int. Cl.: G06Q 10/10

(54) **API BASED CASINO SIGN UP METHOD FOR DUE DILIGENCE CLEARED USERS**

(71) Applicant: Bonus Radar SA, Charlestown, Nevis (KN)
(72) Inventor: Sammut, Jan Luc, Triq Kananea Attard (MT)
(74) Representative: Ellul, Christian

(57) **Abstract**

The smartphone application aims at opening an online account for users, subject to first completing a successful automated due diligence test. Therefore, all users will be considered as due diligence (DD) passed.

## Description

1. The application shall make use of Optical Character Recognition (OCR) owned by a third party to recognize the details of the User, and runs them against 20+ databases in order to detect any possibility of fraudulent activity.
2. The details of the User are determined by the Due Diligence (DD) process which is the core part of the application.
3. The Due Diligence process involves the scanning of an ID documents, including but not limited to Passports, Identity Cards and Driving Licenses that show recognizable proof of residence of the User. In cases where the User uses Credit cards for scanning, the CVV shall be entered manually.
4. The scanned images shall be automatically saved on the User's phone.
5. Setting of Pins and Payment Source.
6. Once all the above has been validated, the application can be logged in using the Pin mentioned above.
7. The Merchant offers are displayed to the User, whereby the User shall then review and select the offers of his interest.
8. Once selected the application will generate the sign-up process.
9. API creates the User's Account on the Merchant's Gaming Platform that was selected.
10. Upon confirmation of the sign-up, a confirmation message shall be received by the User.
11. User shall then be redirected to the Merchant site and logged into Account.

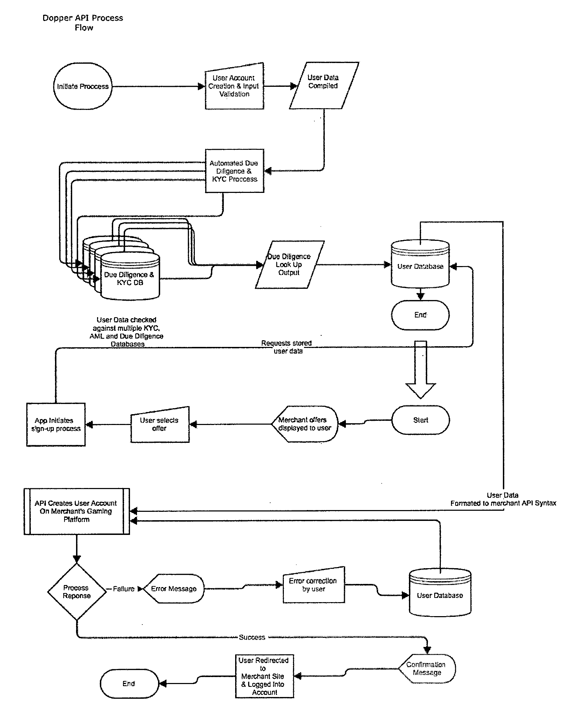

## Claims

1. A process of signing up pre-screened users that have successfully passed due diligence procedures to online casinos using an automated process.
